# EUROPEAN PATENT APPLICATION

(11) **EP 4 736 648 A1**
(43) Date of publication of application: **06.05.2026**
(21) Application number: 24832091.3
(22) Date of filing: 28.06.2024
(51) Int. Cl.: A01N 45/00, A01N 25/02, A01N 65/42, A01P 7/04

(54) **COMPOSITION, PEST CONTROL PREPARATION, AND PEST CONTROL METHOD**

(30) Priority: 30.06.2023 JP 2023108107
(71) Applicant: Sumitomo Chemical Company, Limited, Tokyo 103-6020 (JP)
(72) Inventor: SONOBE, Fuhito, Takarazuka-shi, Hyogo 665-8555 (JP)
(74) Representative: Vossius & Partner Patentanwälte Rechtsanwälte mbB
(86) International application number: PCT/JP2024/023483
(87) International publication number: WO 2025/005233

(57) **Abstract**

The present invention aims to provide a composition that is useful in the production of a pest control formulation, and that contains Veratridine and Cevadine. The present invention specifically provides a composition that contains Veratridine, Cevadine, and one or more glycol monoalkyl ether-based solvents having 3 to 8 carbon atoms; a pest control formulation containing the composition; and a pest control method using the pest control formulation.

## Description

### [Technical Field]

This application claims priority to and the benefit of Japanese Patent Application No. 2023-108107 filed on June 30, 2023 according to the Paris Convention, the entire contents of which are incorporated herein by reference.

The present invention relates to a composition containing insecticidal active ingredients contained in Sabadilla seed extracts, specifically Veratridine and Cevadine, and a glycol monoalkyl ether-based solvent having 3 to 8 carbon atoms; a pest control composition containing the composition; and a pest control method using the composition.

### [Background Art]

Plants of Schoenocaulon spp. are generally referred to as Sabadilla, and a naturally occurring insecticide has been obtained from various tissues of Sabadilla. In particular, the species with the longest history among them is Schoenocaulon officinale.

Veratridine and Cevadine are known as alkaloid active ingredients contained in Sabadilla seeds, and these alkaloids are known to have insecticidal activity.

As an extract of Sabadilla seeds obtained by extracting these alkaloid active ingredients from the Sabadilla seeds, a glycol-based solvent (for example, propylene glycol) extract of Sabadilla seeds by McLaughlin Gormley King Company (MGK) has been reported (see Patent Literatures 1 and 2).

### [Citation List]

### [Patent Literature]

[Patent Literature 1] WO 2017/070451 A1
[Patent Literature 2] WO 2019/133423 A1

### [Summary of the Invention]

### [Problems to be Solved by the Invention]

To use these alkaloid components or the alkaloid components contained in Sabadilla seed extracts as active ingredients in formulations, especially in aerosols, it is necessary to dissolve these alkaloid components in a solvent.

In particular, there is a demand for novel insecticides that are different from conventional insecticides using pyrethroid-based ingredients (for example, synthetic pyrethroids) as active ingredients.

### [Means for Solving the Problems]

The present inventor conducted extensive research to solve the above problem and found that Veratridine and Cevadine dissolve in specific glycol monoalkyl ether-based solvent having 3 to 8 carbon atoms, thus completing the present invention.

That is, the present invention relates to a composition characterized by containing Veratridine, Cevadine, a glycol monoalkyl ether-based solvent having 3 to 8 carbon atoms; a pest control composition characterized by containing the composition; and a pest control method characterized by using the composition.

Accordingly, embodiments of the present invention includes the following.
[1] A composition containing Veratridine, Cevadine, and one or more glycol monoalkyl ether-based solvents having 3 to 8 carbon atoms.
[2] The composition according to [1], wherein the glycol monoalkyl ether-based solvent having 3 to 8 carbon atoms is one or more compounds selected from ethylene glycol monomethyl ether, ethylene glycol monoethyl ether, ethylene glycol monoisopropyl ether, ethylene glycol mono t-butyl ether, 3-methoxybutanol (butylene glycol-3-methoxy ether), 3-methyl-3-methoxy-1-butanol (isobutylene glycol-3-methoxy ether), and propylene glycol monomethyl ether.
[3] The composition according to [1] or [2], wherein the ratio of (the total parts by weight of Veratridine and Cevadine) to (the total parts by weight of the glycol monoalkyl ether-based solvent having 3 to 8 carbon atoms) is 1:1 to 1:1000.
[4] The composition according to any one of [1] to [3], wherein the total weight of Veratridine and Cevadine is 5% by weight or less relative to the total weight of the composition.
[5] The composition according to any one of [1] to [4], wherein the total weight of Veratridine and Cevadine is 0.05% by weight or more and 5% by weight or less relative to the total weight of the composition.
[6] The composition according to any one of [1] to [5], further containing a glycol-based solvent having 3 to 6 carbon atoms selected from the group consisting of propylene glycol, dipropylene glycol, 1,3-butanediol, and 3-methyl-1,3-butanediol.
[7] The composition according to [6], wherein the glycol-based solvent having 3 to 6 carbon atoms is propylene glycol.
[8] The composition according to any one of [1] to [7], wherein Veratridine and Cevadine are contained in a Sabadilla seed extract.
[9] The composition according to [8], wherein the Sabadilla seed extract is a propylene glycol solution.
[10] The composition according to [9], wherein the total weight of Veratridine and Cevadine in the propylene glycol solution which is the Sabadilla seed extract is 0.1% to 50% by weight.
[11] A pest control formulation containing the composition according to any one of [1] to [10].
[12] The pest control formulation according to [11], wherein the pest is a pest arthropod.
[13] The pest control formulation according to [12], wherein the pest arthropod is Diptera or Blattodea.
[14] A pest control method including a step of applying the pest control formulation according to any one of [11] to
[13] to a pest, its habitat, or an area where it is expected to appear.
[15] The composition according to any one of [1] to [10], further containing one or more components selected from Group (a):
   Group (a) consists of acetylcholinesterase inhibitors, GABA-gated chloride ion channel blockers, sodium channel modulators, nicotinic acetylcholine receptor competitive modulators, nicotinic acetylcholine receptor allosteric modulators, glutamate-gated chloride ion channel allosteric modulators, juvenile hormone mimics, multisite inhibitors, chordotonal organ TRPV channel modulators, mites growth inhibitors, microbial disruptors of insect midgut membranes, mitochondrial ATP synthase inhibitors, uncouplers of oxidative phosphorylation, nicotinic acetylcholine receptor channel blockers, chitin synthesis inhibitors, molting inhibitors, ecdysone receptor agonists, octopamine receptor agonists, inhibitors of mitochondrial electron transport chain complexes I, II, III, and IV, voltage-dependent sodium channel blockers, acetyl-CoA carboxylase inhibitors, ryanodine receptor modulators, chordotonal organ modulators, microbial insecticides, acaricidal active ingredients, and nematicidal active ingredients.

### [Effects of the Invention]

The present invention can provide a composition, suitable for formulations, particularly aerosol formulations, in which Veratridine and Cevadine are dissolved in solvents.

### [Mode for Carrying Out the Invention]

In the present invention, Veratridine and Cevadine (hereinafter sometimes referred to as "Present alkaloid components") are alkaloid compounds represented by the following structural formulae.

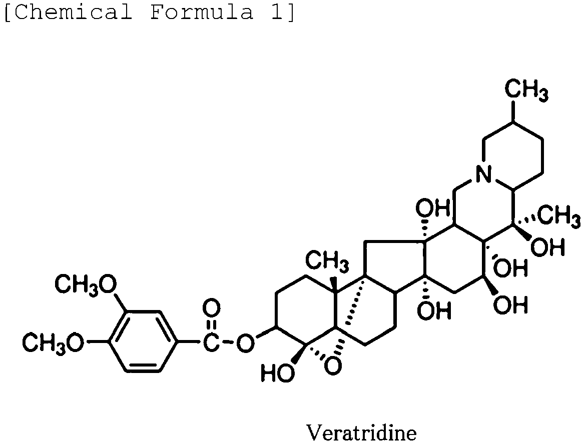

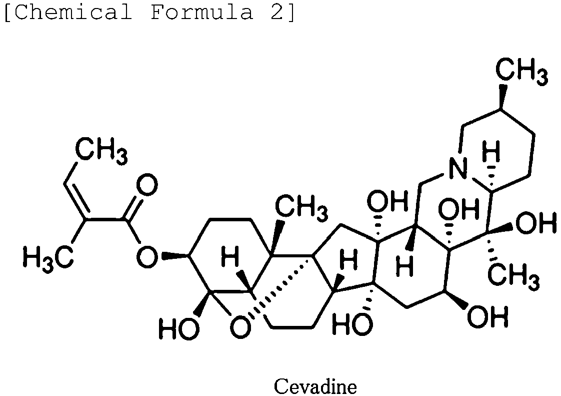

These Veratridine and Cevadine are contained in Sabadilla seeds and can be extracted into an organic solvent by the methods described in, for example, Patent Literatures 1 and 2.

Plants of Schoenocaulon spp. are generally referred to as Sabadilla. Sabadilla seed extracts and/or extraction residues of Sabadilla seeds, etc., can be obtained from any species belonging to the Schoenocaulon. Schoenocaulon spp. includes the following species: Schoenocaulon calcicola, Schoenocaulon caricifolium, Schoenocaulon comatum, Schoenocaulon conzattii, Schoenocaulon dubium (also known as Schoenocaulon gracile), Schoenocaulon framei, Schoenocaulon ghiesbreghtii (also known as Schoenocaulon drummondii, Schoenocaulon yucatanense), Schoenocaulon ignigenum, Schoenocaulon intermedium, Schoenocaulon jaliscense, Schoenocaulon macrocarpum (also known as Schoenocaulon lauricola), Schoenocaulon madidorum, Schoenocaulon megarrhizum, Schoenocaulon mortonii, Schoenocaulon oaxacense, Schoenocaulon obtusum, Schoenocaulon officinale, Schoenocaulon pellucidum, Schoenocaulon plumosum, Schoenocaulon pringlei, Schoenocaulon rzedowskii, Schoenocaulon tenorioi, Schoenocaulon tenue, Schoenocaulon tenuifolium, Schoenocaulon texanum, and Schoenocaulon tigrense.

In the present invention, commercially available Present alkaloid components or Sabadilla seed extracts containing Present alkaloid components may be used, synthesized Present alkaloid components may be used, or Present alkaloid components extracted from Sabadilla seeds may be used. When using Present alkaloid components extracted from Sabadilla seeds, they may be used together with the solvent used for extraction. Hereinafter, the Sabadilla seed extract containing Present alkaloid components together with the solvent used for extraction, is sometimes referred to as "Present Sabadilla seed extract".

A Sabadilla seed extract can be obtained by known methods (for example, the methods described in WO 2017/070451 A1 and WO 2019/133423 A1), but is not limited to these methods. Examples of the solvents for extraction include generally known organic solvents (for example, alkanes, halogenated alkanes, aromatic alkanes, alcohols, and esters), but are not limited thereto. In the present invention, Sabadilla seed extracts obtained using glycol-based solvents may be used.

Examples of the glycol-based solvents include glycol-based solvents having 3 to 6 carbon atoms, specifically selected from the group consisting of propylene glycol, dipropylene glycol, 1,3-butanediol, and 3-methyl-1,3-butanediol. Particularly preferred is propylene glycol. It is preferable that Present Sabadilla seed extract is a propylene glycol solution.

When using Present Sabadilla seed extract, the total weight of Veratridine and Cevadine in the Present Sabadilla seed extract may be 0.1% by weight or more, 1% by weight or more, 5% by weight or more, 50% by weight or less, 30% by weight or less, 20% by weight or less, or 15% by weight or less. The total weight of Veratridine and Cevadine in the Present Sabadilla seed extract is preferably 0.1% to 50% by weight, preferably 1% to 30% by weight, preferably 5% to 20% by weight, and preferably 5% to 15% by weight. The Present Sabadilla seed extract may also contain impurities derived from Sabadilla.

The present invention is a composition containing Veratridine, Cevadine, and one or more glycol monoalkyl ether-based solvents having 3 to 8 carbon atoms (hereinafter, sometimes referred to as "Present composition"). Hereinafter, the glycol monoalkyl ether-based solvent having 3 to 8 carbon atoms is sometimes referred to as "Present glycol monoalkyl ether-based solvent" or "Present glycol ether-based solvent".

The present invention is a composition containing Veratridine, Cevadine, and the Present glycol monoalkyl ether-based solvent.

The glycol monoalkyl ether-based solvent having 3 to 8 carbon atoms is preferably a glycol monoalkyl ether-based solvent having 3 to 6 carbon atoms, more preferably a glycol monoalkyl ether-based solvent having 3 to 4 carbon atoms or 3 to 5 carbon atoms, and particularly preferably a glycol monoalkyl ether-based solvent having 3 carbon atoms.

Specific examples of the glycol monoalkyl ether-based solvents having 3 to 8 carbon atoms include, but are not limited to, ethylene glycol monomethyl ether, ethylene glycol monoethyl ether, ethylene glycol monoisopropyl ether, ethylene glycol mono t-butyl ether, 3-methoxybutanol (butylene glycol-3-methoxy ether), 3-methyl-3-methoxy-1-butanol (isobutylene glycol-3-methoxy ether), and propylene glycol monomethyl ether. Preferred examples include ethylene glycol monomethyl ether, ethylene glycol monoethyl ether, ethylene glycol monoisopropyl ether, 3-methoxybutanol (butylene glycol-3-methoxy ether), and propylene glycol monomethyl ether. More preferred examples are ethylene glycol monomethyl ether and ethylene glycol monoethyl ether. Two or more of the Present glycol monoalkyl ether-based solvents may be used in combination, and the mixing ratio may range from 1:0.01 to 1:100. The mixture of the Present glycol monoalkyl ether-based solvents may be prepared by mixing these compounds, or commercially available products may be used.

The Present composition can be prepared by mixing the Present alkaloid components or the Present Sabadilla seed extract with the Present glycol monoalkyl ether-based solvent. When using the Present Sabadilla seed extract, the Present Sabadilla seed extract and the Present glycol monoalkyl ether-based solvent are mixed so that the weight percent of the total amount of Veratridine and Cevadine contained in the Present Sabadilla seed extract reaches a desired concentration in the prepared composition, and the resulting mixture is stirred at a constant temperature (for example, room temperature (25°C)) to obtain the composition. The resulting composition is in liquid form.

In the Present composition, the ratio of (the total parts by weight of Veratridine and Cevadine) to (the total parts by weight of the glycol monoalkyl ether-based solvent having 3 to 8 carbon atoms) is preferably in the range of 1:1 to 1:1000, preferably in the range of 1:10 to 1:1000, preferably in the range of 1:20 to 1:1000, preferably in the range of 1:30 to 1:1000, preferably in the range of 1:40 to 1:1000, and preferably in the range of 1:50 to 1:1000. The ratio of (the total parts by weight of Veratridine and Cevadine) to (the total parts by weight of the glycol monoalkyl ether-based solvent having 3 to 8 carbon atoms) is more preferably in the range of 1:55.7 to 1:704.3.

Furthermore, the total weight of Veratridine and Cevadine is not particularly limited as long as it is a concentration at which they can be dissolved in the prepared composition, for example, may be 5% by weight or less, 3% by weight or less, 2% by weight or less, 0.01% by weight or more, 0.03% by weight or more, 0.05% by weight or more, 0.1% by weight or more, 0.3% by weight or more, or 0.5% by weight or more, relative to the total weight of the composition. More specifically, examples include 1.52% by weight, 1.04% by weight, 0.51% by weight, and 0.14% by weight. Preferably, it is 0.05% by weight or more and 5% by weight or less; more preferably, it is 0.14% by weight or more and 1.52% by weight or less; and still more preferably, it is 0.51% by weight or more and 1.52% by weight or less.

In the prepared composition, it is confirmed and evaluated whether Veratridine and Cevadine are completely dissolved. The evaluation is determined according to the following evaluation criteria.

### <Evaluation Criteria>

○: A homogeneous solution was observed.
△: A dispersed or suspended state was observed.
×: Neither dissolved nor dispersed; a separated state was observed.

The Present composition may further contain a glycol-based solvent having 3 to 6 carbon atoms, selected from the group consisting of propylene glycol, dipropylene glycol, 1,3-butanediol, and 3-methyl-1,3-butanediol. The glycol-based solvent having 3 to 6 carbon atoms is preferably propylene glycol.

When the Present composition contains a propylene glycol solution of a Sabadilla seed extract, the propylene glycol contained in the solution may be the glycol-based solvent having 3 to 6 carbon atoms.

When the Present composition contains a glycol-based solvent having 3 to 6 carbon atoms, the glycol-based solvent may be the solvent used for extraction of Sabadilla seeds.

When producing the Present composition containing a glycol-based solvent having 3 to 6 carbon atoms using the Present Sabadilla seed extract, the same glycol-based solvent as that used for extraction may be used, or a different glycol-based solvent may be used.

The composition of the present invention containing Veratridine, Cevadine, and one or more glycol monoalkyl ether-based solvents having 3 to 8 carbon atoms can be used in a pest control formulation (hereinafter, sometimes referred to as "Present formulation").

The Present composition may contain one or more components selected from the following group (a) (hereinafter referred to as "Present components").

Each of the Present components described below is a known component and can be obtained from commercially available formulations or produced by known methods. If the Present component is a microorganism, it can also be obtained from a microorganism depository.

Group (a) consists of acetylcholinesterase inhibitors (for example, carbamate insecticides and organophosphate insecticides), GABA-gated chloride ion channel blockers (for example, phenylpyrazole insecticides), sodium channel modulators (for example, pyrethroid insecticides), nicotinic acetylcholine receptor competitive modulators (for example, neonicotinoid insecticides), nicotinic acetylcholine receptor allosteric modulators, glutamate-gated chloride ion channel allosteric modulators (for example, macrolide insecticides), juvenile hormone mimics, multisite inhibitors, chordotonal organ TRPV channel modulators, mites growth inhibitors, microbial disruptors of insect midgut membranes, mitochondrial ATP synthase inhibitors, uncouplers of oxidative phosphorylation, nicotinic acetylcholine receptor channel blockers (for example, nereistoxin insecticides), chitin synthesis inhibitors, molting disruptors, ecdysone receptor agonists, octopamine receptor agonists, inhibitors of mitochondrial electron transport chain complexes I, II, III, and IV, voltage-dependent sodium channel blockers, acetyl-CoA carboxylase inhibitors, ryanodine receptor modulators (for example, diamide insecticides), chordotonal organ modulators, microbial insecticide, acaricidal active ingredients, and nematicidal active ingredients.

The Present formulation may contain inert carriers and auxiliary agents for formulation. Examples of the inert carriers include solid carriers and gaseous carriers. If necessary, surfactants and other auxiliary agents for formulation may also be added to the Present composition to prepare the formulation. The Present composition may also be applied onto the surface of an inert carrier to obtain the Present formulation.

Examples of the Present formulation include the following formulations:
aerosol formulations, pump sprays, baits, microcapsules, oil formulations, emulsifiable concentrates, microemulsion formulations, wettable powders, water-dispersible granules, flowables, incense sticks, mat formulations, electric liquid mosquito repellents, fumigants, fumigation agents, fogging agents, poisoned baits, resin formulations, granules, capsules, chewables, syrups, tablets, dustable powders, suppositories, injections (such as intramuscular, subcutaneous, intravenous, and intraperitoneal), spot-on formulations, pour-on formulations, shampoos, lotions, and pastes.

The Present formulation may also be used as mosquito coils, electric mosquito mats, liquid mosquito repellents, fumigants, fumigation agents, sheet formulations, spot-on formulations, and oral formulations. It is preferable that the Present formulation is an aerosol formulation. The Present formulation typically contains 10% to 95% by weight of the Present composition.

Examples of the solid carriers used in formulation include fine powders and granules of clays (such as kaolin clay, diatomaceous earth, bentonite, Fubasami clay, and acid white clay), fumed silica, wet silica, talc, ceramics, other inorganic minerals (such as sericite, quartz, sulfur, activated carbon, and calcium carbonate), chemical fertilizers (such as ammonium sulfate, ammonium phosphate, ammonium nitrate, urea, and ammonium chloride), and synthetic resins (polyethylene, ethylene-vinyl acetate copolymer, ethylene-methyl methacrylate copolymer, ethylene-methacrylic acid copolymer, ethylene-acrylic acid copolymer, polypropylene, polyacrylonitrile, polymethyl methacrylate, polyester resins such as polyethylene terephthalate; nylon resins such as nylon-6, nylon-11, nylon-66; polyamide resins, polyvinyl chloride, polyvinylidene chloride, and vinyl chloride-propylene copolymer).

Examples of the gaseous carriers include fluorocarbons, butane gas, LPG (liquefied petroleum gas), dimethyl ether, and carbon dioxide gas.

Examples of the other auxiliary agents for formulation include adhesive agents, dispersants, colorants, and stabilizers. Specific examples include casein, gelatin, saccharides (such as starch, gum arabic, cellulose derivatives, and alginic acid), lignin derivatives, bentonite, synthetic water-soluble polymers (such as polyvinyl alcohol, polyvinylpyrrolidone, and polyacrylic acids), isopropyl acid phosphate, 2,6-di-tert-butyl-4-methylphenol, and BHA (a mixture of 2-tert-butyl-4-methoxyphenol and 3-tert-butyl-4-methoxyphenol).

Examples of the pests controlled by the Present formulation include pest arthropods such as pest insects and pest mites, pest mollusks, and pest nematodes. Examples of the pest arthropods include Hemiptera, Lepidoptera, Thysanoptera, Diptera, Coleoptera, Orthoptera, Hymenoptera, Blattodea, Siphonaptera, Psocodae, Thysanura, Acari, Araneae, Polydesmida, Isopoda, Chilopoda, and Gastropoda. The Present formulation is particularly suitable for controlling Diptera or Blattodea.

The pest arthropods to be controlled may be those that have reduced susceptibility or have developed resistance to commercially available insecticides or acaricides. However, in cases where susceptibility to the agents has significantly decreased or resistance to the agents has significantly developed, it is preferable to use the Present composition in combination with insecticides or acaricides other than those against which the decreased susceptibility or resistance has been observed.

The pest control method of the present invention includes a step of applying the Present formulation directly to pests and/or to their habitats (such as plants, soil, indoors, and animals), or to areas where they are expected to appear. The method may also involve treating seeds. Examples of the pest control method of the present invention include foliar application, soil treatment, root treatment, shower application, fumigation, water surface treatment, and seed treatment.

Examples of the pest control methods by applying an effective amount of the Present formulation to soils include a method of applying an effective amount of the Present formulation to soils before or after planting plants; a method of applying an effective amount of the Present formulation to the rhizosphere of crops to protect them from damage such as feeding by pests; and a method of allowing an effective amount of the Present formulation to be absorbed and translocated from the roots or other plant parts into the plant body, thereby controlling pests that feed on the plant. Specific examples thereof include planting hole treatment (spraying into planting holes, soil mixing after planting hole treatment), plant foot treatment (plant foot spraying, soil mixing after plant foot treatment, irrigation at plant foot, plant foot treatment at a later seeding raising stage), planting furrow treatment (planting furrow spraying, soil mixing after planting furrow treatment), planting row treatment (planting row spraying, soil mixing after planting row treatment, planting row spraying at a growing stage), planting row treatment at the time of sowing (planting row spraying at the time of sowing, soil mixing after planting row treatment at the time of sowing), broadcast treatment (overall soil surface spraying, soil mixing after broadcast treatment), side-article treatment, treatment of water surface (application to water surface, application to water surface after flooding), other soil spraying treatment (spraying of a granular formulation on leaves at a growing stage, spraying under a canopy or around a tree stem, spraying on the soil surface, mixing with surface soil, spraying into seed holes, spraying on the ground surfaces of furrows, spraying between plants), other irrigation treatment (soil irrigation, irrigation at a seedling raising stage, chemical liquid injection treatment, irrigation of a plant part just above the ground, chemical liquid drip irrigation, chemigation), seedling raising box treatment (spraying into a seedling raising box, irrigation of a seedling raising box, flooding into a seedling raising box with chemical liquid), seedling raising tray treatment (spraying on a seedling raising tray, irrigation of a seedling raising tray, flooding into a seedling raising tray with chemical liquid), seedbed treatment (spraying on a seedbed, irrigation of a seedbed, spraying on a lowland rice nursery, immersion of seedlings), seedbed soil incorporation treatment (mixing with seedbed soil, mixing with seedbed soil before sowing, spraying at sowing before covering with soils, spraying at sowing after covering with soils, mixing with covering with soils), and other treatment (mixing with culture soil, plowing under, mixing with surface soil, mixing with soil at the place where raindrops fall from a canopy, treatment at a planting position, spraying of a granule formulation on flower clusters, mixing with a paste fertilizer).

When the Present formulation is used for pest control in the agricultural field, the application rate is usually 1 to 10,000 g per 10,000 m² in terms of the total amount of Veratridine and Cevadine. When treating seeds or vegetative reproduction organs, the total amount of Veratridine and Cevadine applied is usually in the range of 0.001 to 100 g per 1 kg of the seeds or vegetative reproduction organs. If the Present formulation is in the form of an emulsifiable concentrate, wettable powder, or flowable formulation, it is usually diluted with water so that the concentration of the active ingredient is 0.01 to 10,000 ppm to apply. Granules, dustable powders, and the like are generally applied as they are.

These formulations and their aqueous dilutions may be directly applied to pests or to plants such as crops that need to be protected from pests. Alternatively, they may be applied to soil in cultivated fields to control pest arthropods inhabiting the soil.

In addition, it is also possible to carry out treatment by methods such as wrapping a resin formulation processed into sheet or string around crops, stretching it near crops, and laying it on the soil at the base of plants.

When the Present formulation is used for controlling pests inhabiting indoor environments, the application rate of the total amount of Veratridine and Cevadine is usually 0.01 to 1,000 mg per 1 m² of treated surface area when applied on the surface, and 0.01 to 500 mg per 1 m³ of treated space when applied to the space. If the Present formulation is in the form of an emulsifiable concentrate, wettable powder, or flowable formulation, it is usually diluted with water so that the concentration of the active ingredient is 0.1 to 10,000 ppm to apply. Oil formulations, aerosol formulations, fumigants, and poisoned baits are generally applied as they are.

In addition, the Present formulation can be used as a pest control agent in agricultural lands such as fields, paddy fields, turfs, and orchards. Examples of the plants include the following.

Crops: corn, rice, wheat, barley, rye, oats, sorghum, cotton, soybeans, peanuts, buckwheat, sugar beet, rapeseed, sunflower, sugarcane, tobacco, etc.,

Vegetables: Solanaceous vegetables (such as eggplant, tomato, green pepper, chili pepper, and potato), cucurbitaceous vegetables (such as cucumber, pumpkin, zucchini, watermelon, and melon), cruciferous vegetables (such as radish, turnip, horseradish, kohlrabi, Chinese cabbage, cabbage, mustard greens, broccoli, and cauliflower), compositae vegetables (such as burdock, garland chrysanthemum, artichoke, and lettuce), liliaceous vegetables (green onion, onion, garlic, asparagus), umbelliferous vegetables (such as carrot, parsley, celery, and angelica), chenopodiaceous vegetables (such as spinach and Swiss chard), labiatae vegetables (such as perilla, mint, and basil), strawberry, sweet potato, yam, taro, etc., as well as flowers and ornamental plants,

Fruit trees: pome fruits (such as apple, European pear, Japanese pear, quince, and medlar), stone fruits (such as peach, plum, nectarine, Japanese apricot, cherry, apricot, and prune), citrus fruits (such as satsuma mandarin, orange, lemon, lime, and grapefruit), nuts (such as chestnut, walnut, hazelnut, almond, pistachio, cashew nut, and macadamia nut), berries (such as blueberry, cranberry, blackberry, and raspberry), grape, persimmon, olive, loquat, banana, coffee, date palm, and coconut, etc.,

Trees other than fruit trees: tea, mulberry, flowering trees, street trees (ash, birch, dogwood, eucalyptus, ginkgo, lilac, maple, oak, poplar, redbud, sweetgum, plane tree, zelkova, arborvitae, fir, hemlock, juniper, pine, spruce, yew), etc.

The above plants include plants which may be produced by natural breeding, plants which may be generated by mutation, F1 hybrid plants, and genetically modified crops. Examples of the genetically modified crops include plants to which tolerance to herbicides, such as HPPD (4-hydroxyphenylpyruvate dioxygenase enzyme) inhibitors such as isoxaflutole, ALS (acetolactate synthase) inhibitors such as imazethapyr and thifensulfuron-methyl, EPSP (5-enolpyruvylshikimate-3-phosphate synthase) inhibitors, glutamine synthetase inhibitors, PPO (protoporphyrinogen oxidase) inhibitors, bromoxynil or dicamba, has been imparted; plants which become able to synthesize a selective toxin known in the genus Bacillus such as Bacillus thuringiensis or the like; and plants which can synthesize a gene fragment or the like which is partially identical to an endogenous gene derived from a pest insect, and induce a gene silencing (RNAi; RNA interference) in the target pest insect body to impart a specific insecticidal activity.

The above plants are not specifically limited as long as they are generally cultivated cultivars.

### [Examples]

The present invention will be specifically described below by way of examples, but the present invention is not limited in any way by these examples.

A Sabadilla seed extract obtained by the method described in Patent Literature 1, containing 10% by weight of Veratridine and Cevadine and 40% by weight of propylene glycol was weighed together with various materials in the following container in a predetermined amount and mixed by stirring under the following conditions.
Container: Screw tube (volume: 100 mL, material: glass)
Stirring: For 1 minute at room temperature (25°C) by magnetic stirrer
Observation: Immediately after stirring, at room temperature (25°C).

Next, the state of the mixed solution was observed and evaluated based on the Evaluation Criteria below.

### <Evaluation Criteria>

○: A homogeneous solution was observed.
△: A dispersed or suspended state was observed.
×: Neither dissolved nor dispersed; a separated state was observed.

Each Composition of the present invention was prepared using ethylene glycol monomethyl ether, ethylene glycol monoethyl ether, ethylene glycol monoisopropyl ether, ethylene glycol mono t-butyl ether, 3-methoxybutanol (butylene glycol-3-methoxy ether), 3-methyl-3-methoxy-1-butanol (isobutylene glycol-3-methoxy ether), or propylene glycol monomethyl ether, respectively. The Composition of the present invention prepared using ethylene glycol monomethyl ether was designated as the Composition of the present invention 1; the Composition of the present invention prepared using ethylene glycol monoethyl ether was designated as the Composition of the present invention 2; the Composition of the present invention prepared using ethylene glycol monoisopropyl ether was designated as the Composition of the present invention 3; the Composition of the present invention prepared using ethylene glycol mono t-butyl ether was designated as the Composition of the present invention 4; the Composition of the present invention prepared using 3-methoxybutanol (butylene glycol-3-methoxy ether) was designated as the Composition of the present invention 5; the Composition of the present invention prepared using propylene glycol monomethyl ether was designated as the Composition of the present invention 6; and the Composition of the present invention prepared using 3-methyl-3-methoxy-1-butanol (isobutylene glycol-3-methoxy ether) was designated as the Composition of the present invention 7.

In addition, as Comparative compositions, the composition prepared using ethylene glycol dimethyl ether was designated as the Comparative composition 1, and the composition prepared using propylene glycol diacetate was designated as the Comparative composition 2.

Each solvent was added to a Sabadilla seed extract in a predetermined amount, thereby adjusting the concentration of the Sabadilla seed extract in the resulting composition to a predetermined value.
The concentrations of the Sabadilla seed extract: 15.20 [w/w%], 10.40 [w/w%], 5.10 [w/w%], and 1.40 [w/w%].

The measurement results for the Composition of the present invention are shown in Table 1 below.

**[Table 1]**

| | Solvent | Concentration (w/w%) | | | |
|---|---|---|---|---|---|
| | | 15.20 | 10.40 | 5.10 | 1.40 |
| Example 1 (Composition of the present invention 1) | ethylene glycol monomethyl ether | ○ | ○ | ○ | ○ |
| Example 2 (Composition of the present invention 2) | ethylene glycol monoethyl ether | ○ | ○ | ○ | ○ |
| Example 3 (Composition of the present invention 3) | ethylene glycol monoisopropyl ether | ○ | ○ | ○ | ○ |
| Example 4 (Composition of the present invention 4) | ethylene glycol mono t-butyl ether | ○ | ○ | ○ | ○ |
| Example 5 (Composition of the present invention 5) | 3-methoxybutanol | ○ | ○ | ○ | ○ |
| Example 6 (Composition of the present invention 6) | propylene glycol monomethyl ether | ○ | ○ | ○ | ○ |
| Example 7 (Composition of the present invention 7) | 3-methyl-3-methoxy-1-butanol | Δ | ○ | ○ | ○ |

The measurement results of the Comparative compositions are shown in Table 2 below.

**[Table 2]**

| | Solvent | Concentration (w/w%) | | | |
|---|---|---|---|---|---|
| | | 15.20 | 10.40 | 5.10 | 1.40 |
| Comparative Example 1 (Comparative composition 1) | ethylene glycol dimethyl ether | × | Δ | Δ | Δ |
| Comparative Example 2 (Comparative composition 2) | propylene glycol diacetate | × | × | × | × |

As shown in Table 1, in the Composition of the present invention 1 to the Composition of the present invention 7, each obtained using ethylene glycol monomethyl ether, ethylene glycol monoethyl ether, ethylene glycol mono t-butyl ether, 3-methoxybutanol, propylene glycol monomethyl ether, or 3-methyl-3-methoxy-1-butanol itself or a solvent containing any of these, good dissolution of Veratridine and Cevadine was observed in each composition. On the other hand, as shown in Table 2, in the case of the Comparative composition 1 and the Comparative composition 2 obtained using ethylene glycol dimethyl ether and propylene glycol diacetate, respectively, low dissolution of Veratridine and Cevadine in the composition was observed at any of the predetermined concentrations of the Sabadilla seed extract.

### Test Example 1

An aerosol formulation is obtained by placing 60 parts by weight of the Composition of the present invention 1 into an aerosol container and then filling it with 40 parts by weight of liquefied petroleum gas (a mixture of propane, isobutane, and butane; saturated vapor pressure: 0.47 MPa (20°C)). By applying this aerosol formulation to cockroaches, the cockroaches can be controlled.

### Test Example 2

An aerosol formulation is obtained by placing 60 parts by weight of the Composition of the present invention 2 into an aerosol container and then filling it with 40 parts by weight of liquefied petroleum gas (a mixture of propane, isobutane, and butane; saturated vapor pressure: 0.47 MPa (20°C)). By applying this aerosol formulation to cockroaches, the cockroaches can be controlled.

### Test Example 3

An aerosol formulation is obtained by placing 60 parts by weight of the Composition of the present invention 3 into an aerosol container and then filling it with 40 parts by weight of liquefied petroleum gas (a mixture of propane, isobutane, and butane; saturated vapor pressure: 0.47 MPa (20°C)). By applying this aerosol formulation to cockroaches, the cockroaches can be controlled.

### Test Example 4

An aerosol formulation is obtained by placing 60 parts by weight of the Composition of the present invention 4 into an aerosol container and then filling it with 40 parts by weight of liquefied petroleum gas (a mixture of propane, isobutane, and butane; saturated vapor pressure: 0.47 MPa (20°C)). By applying this aerosol formulation to cockroaches, the cockroaches can be controlled.

### Test Example 5

An aerosol formulation is obtained by placing 60 parts by weight of the Composition of the present invention 5 into an aerosol container and then filling it with 40 parts by weight of liquefied petroleum gas (a mixture of propane, isobutane, and butane; saturated vapor pressure: 0.47 MPa (20°C)). By applying this aerosol formulation to cockroaches, the cockroaches can be controlled.

### Test Example 6

An aerosol formulation is obtained by placing 60 parts by weight of the Composition of the present invention 6 into an aerosol container and then filling it with 40 parts by weight of liquefied petroleum gas (a mixture of propane, isobutane, and butane; saturated vapor pressure: 0.47 MPa (20°C)). By applying this aerosol formulation to cockroaches, the cockroaches can be controlled.

### Test Example 7

An aerosol formulation is obtained by placing 60 parts by weight of the Composition of the present invention 7 into an aerosol container and then filling it with 40 parts by weight of liquefied petroleum gas (a mixture of propane, isobutane, and butane; saturated vapor pressure: 0.47 MPa (20°C)). By applying this aerosol formulation to cockroaches, the cockroaches can be controlled.

### Test Example 8

An aerosol formulation is obtained by placing 60 parts by weight of the Composition of the present invention 1 into an aerosol container and then filling it with 40 parts by weight of liquefied petroleum gas (a mixture of propane, isobutane, and butane; saturated vapor pressure: 0.35 MPa (20°C)). By applying this aerosol formulation to cockroaches, the cockroaches can be controlled.

### Test Example 9

An aerosol formulation is obtained by placing 60 parts by weight of the Composition of the present invention 2 into an aerosol container and then filling it with 40 parts by weight of liquefied petroleum gas (a mixture of propane, isobutane, and butane; saturated vapor pressure: 0.35 MPa (20°C)). By applying this aerosol formulation to cockroaches, the cockroaches can be controlled.

### Test Example 10

An aerosol formulation is obtained by placing 60 parts by weight of the Composition of the present invention 3 into an aerosol container and then filling it with 40 parts by weight of liquefied petroleum gas (a mixture of propane, isobutane, and butane; saturated vapor pressure: 0.35 MPa (20°C)). By applying this aerosol formulation to cockroaches, the cockroaches can be controlled.

### Test Example 11

An aerosol formulation is obtained by placing 60 parts by weight of the Composition of the present invention 4 into an aerosol container and then filling it with 40 parts by weight of liquefied petroleum gas (a mixture of propane, isobutane, and butane; saturated vapor pressure: 0.35 MPa (20°C)). By applying this aerosol formulation to cockroaches, the cockroaches can be controlled.

### Test Example 12

An aerosol formulation is obtained by placing 60 parts by weight of the Composition of the present invention 5 into an aerosol container and then filling it with 40 parts by weight of liquefied petroleum gas (a mixture of propane, isobutane, and butane; saturated vapor pressure: 0.35 MPa (20°C)). By applying this aerosol formulation to cockroaches, the cockroaches can be controlled.

### Test Example 13

An aerosol formulation is obtained by placing 60 parts by weight of the Composition of the present invention 6 into an aerosol container and then filling it with 40 parts by weight of liquefied petroleum gas (a mixture of propane, isobutane, and butane; saturated vapor pressure: 0.35 MPa (20°C)). By applying this aerosol formulation to cockroaches, the cockroaches can be controlled.

### Test Example 14

An aerosol formulation is obtained by placing 60 parts by weight of the Composition of the present invention 7 into an aerosol container and then filling it with 40 parts by weight of liquefied petroleum gas (a mixture of propane, isobutane, and butane; saturated vapor pressure: 0.35 MPa (20°C)). By applying this aerosol formulation to cockroaches, the cockroaches can be controlled.

### Test Example 15

An aerosol formulation is obtained by placing 60 parts by weight of the Composition of the present invention 1 into an aerosol container and then filling it with 40 parts by weight of dimethyl ether as a propellant gas. By applying this aerosol formulation to cockroaches, the cockroaches can be controlled.

### Test Example 16

An aerosol formulation is obtained by placing 60 parts by weight of the Composition of the present invention 2 into an aerosol container and then filling it with 40 parts by weight of dimethyl ether as a propellant gas. By applying this aerosol formulation to cockroaches, the cockroaches can be controlled.

### Test Example 17

An aerosol formulation is obtained by placing 60 parts by weight of the Composition of the present invention 3 into an aerosol container and then filling it with 40 parts by weight of dimethyl ether as a propellant gas. By applying this aerosol formulation to cockroaches, the cockroaches can be controlled.

### Test Example 18

An aerosol formulation is obtained by placing 60 parts by weight of the Composition of the present invention 4 into an aerosol container and then filling it with 40 parts by weight of dimethyl ether as a propellant gas. By applying this aerosol formulation to cockroaches, the cockroaches can be controlled.

### Test Example 19

An aerosol formulation is obtained by placing 60 parts by weight of the Composition of the present invention 5 into an aerosol container and then filling it with 40 parts by weight of dimethyl ether as a propellant gas. By applying this aerosol formulation to cockroaches, the cockroaches can be controlled.

### Test Example 20

An aerosol formulation is obtained by placing 60 parts by weight of the Composition of the present invention 6 into an aerosol container and then filling it with 40 parts by weight of dimethyl ether as a propellant gas. By applying this aerosol formulation to cockroaches, the cockroaches can be controlled.

### Test Example 21

An aerosol formulation is obtained by placing 60 parts by weight of the Composition of the present invention 7 into an aerosol container and then filling it with 40 parts by weight of dimethyl ether as a propellant gas. By applying this aerosol formulation to cockroaches, the cockroaches can be controlled.

### [Industrial applicability]

A composition of the present invention, which contains Veratridine, Cevadine, and one or more glycol monoalkyl ether-based solvents having 3 to 8 carbon atoms is a composition in which Veratridine and Cevadine are uniformly dissolved, and is useful for the production of a pest control formulation. A formulation containing the composition of the present invention is useful for controlling a pest.

## Claims

1. A composition comprising Veratridine, Cevadine, and one or more glycol monoalkyl ether-based solvents having 3 to 8 carbon atoms.

2. The composition according to [1], wherein the glycol monoalkyl ether-based solvent having 3 to 8 carbon atoms is one or more compounds selected from ethylene glycol monomethyl ether, ethylene glycol monoethyl ether, ethylene glycol monoisopropyl ether, ethylene glycol mono t-butyl ether, 3-methoxybutanol (butylene glycol-3-methoxy ether), 3-methyl-3-methoxy-1-butanol (isobutylene glycol-3-methoxy ether), and propylene glycol monomethyl ether.

3. The composition according to claim 1 or 2, wherein the ratio of (the total parts by weight of Veratridine and Cevadine) to (the total parts by weight of the glycol monoalkyl ether-based solvent having 3 to 8 carbon atoms) is 1:1 to 1:1000.

4. The composition according to any one of claims 1 to 3, wherein the total weight of Veratridine and Cevadine is 5% by weight or less relative to the total weight of the composition.

5. The composition according to any one of claims 1 to 4, wherein the total weight of Veratridine and Cevadine is 0.05% by weight or more and 5% by weight or less relative to the total weight of the composition.

6. The composition according to any one of claims 1 to 5, further comprising a glycol-based solvent having 3 to 6 carbon atoms selected from the group consisting of propylene glycol, dipropylene glycol, 1,3-butanediol, and 3-methyl-1,3-butanediol.

7. The composition according to claim 6, wherein the glycol-based solvent having 3 to 6 carbon atoms is propylene glycol.

8. The composition according to any one of claims 1 to 7, wherein Veratridine and Cevadine are contained in a Sabadilla seed extract.

9. The composition according to claim 8, wherein the Sabadilla seed extract is a propylene glycol solution.

10. The composition according to claim 9, wherein the total weight of Veratridine and Cevadine in the propylene glycol solution which is the Sabadilla seed extract is 0.1% to 50% by weight.

11. A pest control formulation comprising the composition according to any one of claims 1 to 10.

12. The pest control formulation according to claim 11, wherein the pest is a pest arthropod.

13. The pest control formulation according to claim 12, wherein the pest arthropod is Diptera or Blattodea.

14. A pest control method comprising a step of applying the pest control formulation according to any one of claims 11 to 13 to a pest, its habitat, or an area where it is expected to appear.

15. The composition according to any one of claims 1 to 10, further comprising one or more components selected from Group (a):
Group (a) consists of acetylcholinesterase inhibitors, GABA-gated chloride ion channel blockers, sodium channel modulators, nicotinic acetylcholine receptor competitive modulators, nicotinic acetylcholine receptor allosteric modulators, glutamate-gated chloride ion channel allosteric modulators, juvenile hormone mimics, multisite inhibitors, chordotonal organ TRPV channel modulators, mites growth inhibitors, microbial disruptors of insect midgut membranes, mitochondrial ATP synthase inhibitors, uncouplers of oxidative phosphorylation, nicotinic acetylcholine receptor channel blockers, chitin synthesis inhibitors, molting inhibitors, ecdysone receptor agonists, octopamine receptor agonists, inhibitors of mitochondrial electron transport chain complexes I, II, III, and IV, voltage-dependent sodium channel blockers, acetyl-CoA carboxylase inhibitors, ryanodine receptor modulators, chordotonal organ modulators, microbial insecticides, acaricidal active ingredients, and nematicidal active ingredients.
